# EUROPÄISCHE PATENTSCHRIFT

(11) **EP 0 674 117 B1**
(45) Veröffentlichungstag und Bekanntmachung des Hinweises auf die Patenterteilung: **18.03.1998**
(21) Anmeldenummer: 95102236.7
(22) Anmeldetag: 18.02.1995
(51) Int. Cl.: F16D 65/22

(54) **Trommelbremse für Fahrzeuge**
Drum brake for vehicles
Frein à tambour pour véhicules

(30) Priorität: 05.03.1994 DE 4407401
(43) Veröffentlichungstag der Anmeldung: 27.09.1995
(73) Patentinhaber: BPW Bergische Achsen Kommanditgesellschaft, 51674 Wiehl (DE)
(72) Erfinder: Steiner, Helmut, Dipl.-Ing., D-51674 Wiehl (DE)
(74) Vertreter: Stenger, Watzke & Ring Patentanwälte

(56) Entgegenhaltungen:
- DE-U- 9 116 274
- FR-A- 2 037 604
- GB-A- 1 163 129
- GB-A- 2 013 800
- GB-A- 2 190 156

## Beschreibung

Die Erfindung betrifft eine Trommelbremse für Fahrzeuge mit zwei durch einen Bremsnocken betätigbaren Bremsbacken, die jeweils einen Belagträger mit zwei an dessen Unterseite angeordneten.Stegen umfassen, an deren einem Ende ein Lagerbolzen für eine mit dem Bremsnocken zusammenwirkende Bremsrolle angeordnet ist.

Fahrzeug-Trommelbremsen der voranstehend beschriebenen Art sind bekannt. Bei ihnen ist der Lagerbolzen in fluchtenden Bohrungen in den Bremsbackenstegen angeordnet. Die axiale Lagesicherung des mit einem Kopf versehenen Lagerbolzens erfolgt durch einen in eine Querbohrung eingesetzten Splint bzw. durch Seegerringe.

In Dokument GB-A-2 190 156 ist ein vergleichbarer Lagerbolzen für die Befestigung des Bremsbackens durch an den Außenseiten der Bremsbackenstege anliegende Sprengringe gesichert.

Diese bekannte Konstruktion hat den Nachteil einer umständlichen Montage; außerdem kann trotz der Anordnung von O-Ringen Schmutz in die zylindrischen Gleitlagerflächen zwischen Bremsrolle und Lagerbolzen eindringen.

Der Erfindung liegt die **Aufgabe** zugrunde, bei einer Trommelbremse der eingangs beschriebenen Art die Anordnung und Ausbildung des die Bremsrolle lagernden Lagerbolzens dahingehend zu verbessern, daß sich einerseits eine einfachere Montage und andererseits ein wirksamerer Schutz gegen das Eindringen von Schmutz in die Lagerflächen ergibt.

Die **Lösung** dieser Aufgabenstellung durch die Erfindung ist dadurch gekennzeichnet, daß der Lagerbolzen durch in Ringnuten des Lagerbolzens eingreifende, an den Innenseiten der Bremsbackenstege anliegende Sprengringe in axialer Richtung an der Bremsbacke gehalten und die Bremsrolle mit an den Sprengringen anliegenen Anlageflächen ausgebildet ist.

Durch diese erfindungsgemäße Weiterbildung ergibt sich der Vorteil, daß der mit den Ringnuten ausgebildete Lagerbolzen auf einfache Weise in axialer Richtung in die mit den Sprengringen versehene Bremsrolle eingeschlagen werden kann, wobei die nach der Montage an den Innenseiten der Bremsbackenstege anliegenden Sprengringe zusammen mit den in der Bremsrolle ausgebildeten Anlageflächen eine labyrinthartige Abdichtung der zylindrischen Lagerflächen zwischen Bremsrolle und Lagerbolzen ergeben. Mit dem erfindungsgemäßen Vorschlag wird somit nicht nur die Montage der Bremsrolle und des Lagerbolzens vereinfacht, sondern eine verbesserte Abdichtung der Lagerflächen erzielt.

Gemäß einem weiteren Merkmal der Erfindung können die für die Sprengringe vorgesehenen Anlageflächen durch ringförmige Ausnehmungen in den Stirnflächen der Bremsrolle gebildet werden, in denen ein Dichtring angeordnet ist. Diese nach dem Einbringen der Sprengringe in die Bremsrolle in Fett eingesetzten Dichtringe ergeben eine besonders wirkungsvolle Abdichtung gegen Eindringen von Schmutz. Da sie ebenso wie die Sprengringe vor der Montage der Bremsrolle vormontiert werden können, stellen sie keine Montagebehinderung dar.

Bei einer bevorzugten Ausführungsform der Erfindung ist zwischen den zylindrischen Lagerflächen des Lagerbolzens und der Bremsrolle eine Lagerbuchse angeordnet, die aus speziellem Lagerwerkstoff, wie beispielsweise Messing oder Kunststoff, hergestellt ist und zusammen mit der Abdichtung durch die Sprengringe und/oder Dichtringe eine wartungsfreie Ausführung der Bremsrollenlagerung ergibt.

Auf der Zeichnung ist ein Ausführungsbeispiel der erfindungsgemäßen Lagerbolzenausführung für eine Fahrzeug-Trommelbremse dargestellt, und zwar zeigen:
- Fig. 1: eine Seitenansicht eines Endes einer Bremsbacke für Fahrzeug-Trommelbremsen mit Lagerbolzen und Bremsrolle, die mit einem Bremsnocken zusammenwirkt,
- Fig. 2: einen Teilschnitt gemäß der Schnittlinie II - II in Fig. 1,
- Fig. 3: einen Schnitt durch die Bremsrolle und durch den Lagerbolzen vor der Montage,
- Fig. 4: einen der Fig. 3 entsprechenden Schnitt nach der Montage und
- Fig. 5: eine vergrößerte Darstellung der in Fig. 4 strichpunktiert eingekreisten Einzelheit.

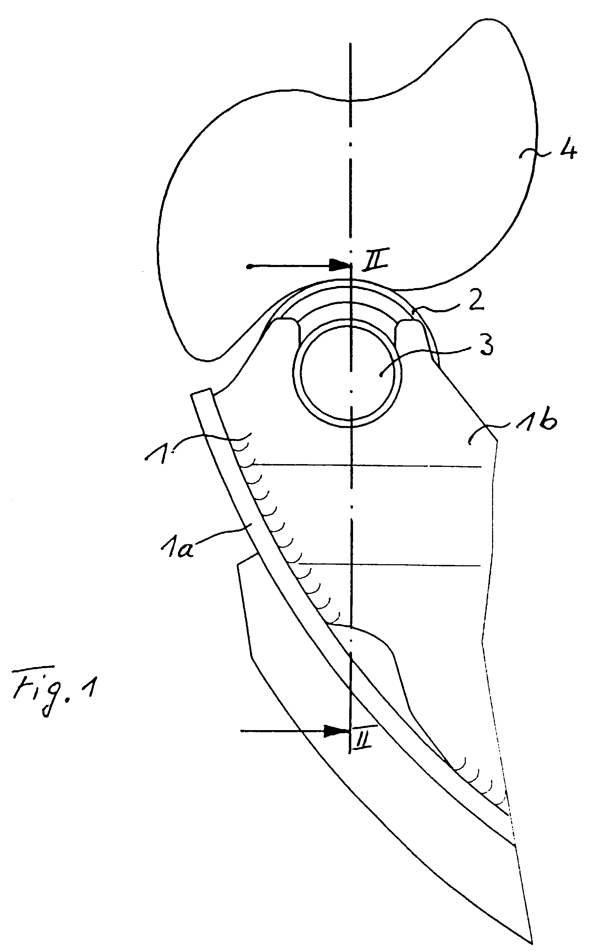

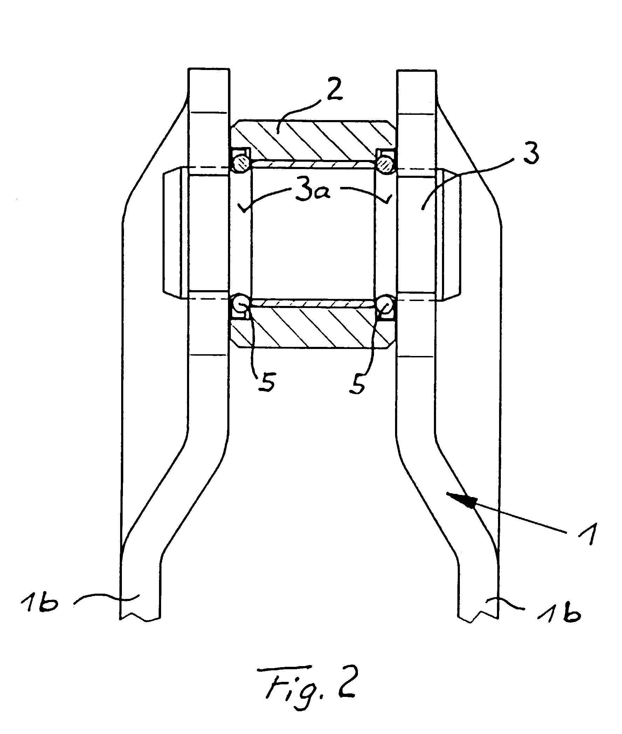

In den Fig. 1 und 2 ist ein Ende einer Bremsbacke 1 für eine Trommelbremse zu erkennen, die einen bogenförmigen Bremsbelagträger 1a und zwei parallel zueinander verlaufende Bremsbackenstege 1b umfaßt. An einem Ende dieser Bremsbackenstege 1b ist eine Bremsrolle 2 mittels eines Lagerbolzens 3 drehbar gelagert. Diese Bremsrolle 2 wirkt mit einem Bremsnocken 4 zusammen, der in Fig. 1 dargestellt ist und zur Spreizung der beiden Bremsbacken 1 der Trommelbremse verdreht wird.

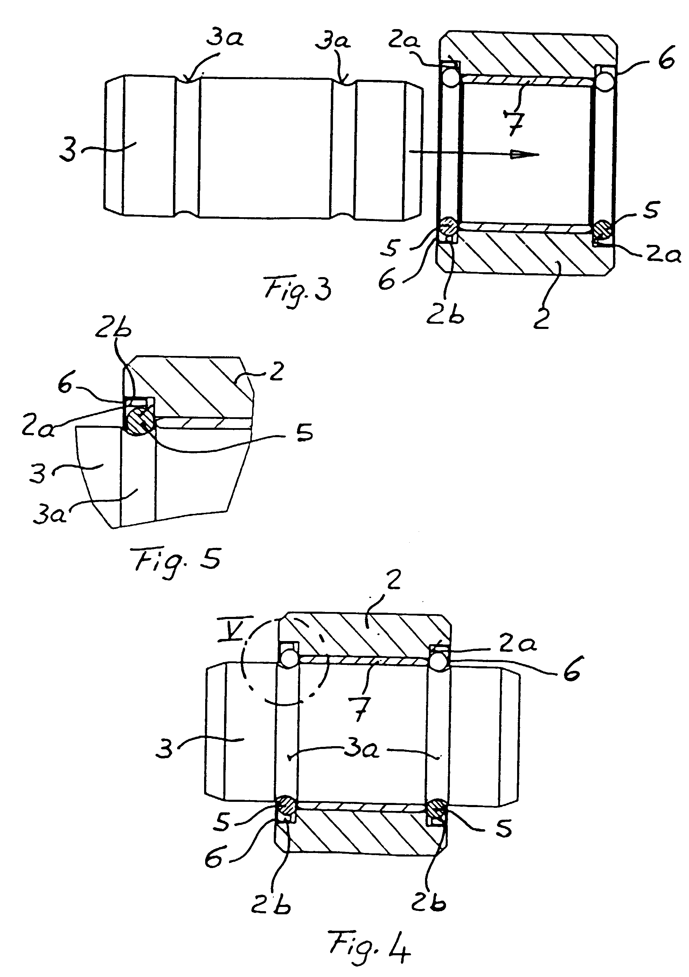

Wie insbesondere auf den Fig. 3 und 4 hervorgeht, ist der Lagerbolzen 3 mit zwei Ringnuten 3a ausgebildet, die mit geschlitzten Sprengringen 5 zusammenwirken. Im Montagezustand (siehe Fig. 2) liegen diese Sprengringe 5 an der Innenseite der Bremsbackenstege 1b an, so daß sie den Lagerbolzen 3 gegen ein axiales Verschieben sichern.

Durch diese Sprengringe 5 wird gleichzeitig die Bremsrolle 2 in axialer Richtung auf dem Lagerbolzen 3 gehalten. Zu diesem Zweck ist die Bremsrolle 2 mit ringförmigen Anlageflächen 2a versehen, die in Ausnehmungen 2b in den Stirnflächen der Bremsrolle 2 liegen. In diese Ausnehmungen 2b sind im Querschnitt winkelförmige Dichtringe 6 eingesetzt, die zusammen mit den Sprengringen 5 eine labyrinthartige Abdichtung der zylindrischen Lagerflächen zwischen Bremsrolle 2 und Lagerbolzen 3 ergeben. Vorzugsweise wird die Ausnehmung 2b mit Fett gefüllt, um eine besonders gute Abdichtung zu erzielen.

Beim Ausführungsbeispiel ist zwischen den zylindrischen Lagerflächen der Bremsrolle 2 und des Lagerbolzens 3 eine Lagerbuchse 7 aus speziellem Lagermaterial eingesetzt, so daß sie in Verbindung mit der voranstehend beschriebenen Abdichtung eine wartungsfreie und mit einer Dauerschmierung versehene Lagerung der Bremsrolle 2 ergibt.

Zur Montage der Bremsrollenlagerung wird die Bremsrolle 2 mit der Lagerbuchse 7 versehen; anschließend werden die Sprengringe 5 und danach die Dichtringe 6 eingesetzt. Nunmehr kann die Bremsrolle 2 zwischen die Bremsbackenstege 1b der Bremsbacke 1 eingeführt und der Lagerbolzen 3 in Achsrichtung (wie durch den Pfeil in Fig. 3 angedeutet) in Bohrungen in den Bremsbackenstegen 1b eingeschlagen werden. Hierbei schnappen die aus Federstahl hergestellten, geschlitzten Sprengringe 5 in die Ringnuten 3a des Lagerbolzens 3 ein, sobald dieser die vorschriftsmäßige Lage innerhalb der Bremsrolle 2 erreicht hat.

Bei dem in Fig. 1 dargestellten Ausführungsbeispiel sind die Bremsbackenstege 1b nicht mit dem Durchmesser des Lagerbolzens 3 entsprechenden Lagerbohrungen, sondern jeweils mit einer gabelförmigen Lageröffnung 1c versehen. Diese Lageröffnung umfaßt den Lagerbolzen 3 auf einem Umfang, der größer als 180° ist.

### Bezugszeichenliste:

- 1: Bremsbacke
- 1a: Bremsbelagträger
- 1b: Bremsbackensteg
- 1c: Lageröffnung
- 2: Bremsrolle
- 2a: Anlagefläche
- 2b: Ausnehmung
- 3: Lagerbolzen
- 3a: Ringnut
- 4: Bremsnocken
- 5: Sprengring
- 6: Dichtring
- 7: Lagerbuchse

## Patentansprüche

1. Trommelbremse für Fahrzeuge mit zwei durch einen Bremsnocken (4) betätigbaren Bremsbacken (1), die jeweils einen Belagträger (1a) mit zwei an dessen Unterseite angeordneten Stegen (1b) umfassen, an deren einem Ende ein Lagerbolzen (3) für eine mit dem Bremsnocken (4) zusammenwirkende Bremsrolle (2) angeordnet ist,
**dadurch gekennzeichnet,**
daß der Lagerbolzen (3) durch in Ringnuten (3a) des Lagerbolzens (3) eingreifende, an den Innenseiten der Bremsbackenstegen (1b) anliegende Sprengringe (5) in axialer Richtung an der Bremsbacke (1) gehalten und die Bremsrolle (2) mit an den Sprengringen (5) anliegenden Anlageflächen (2a) ausgebildet ist.

2. Trommelbremse nach Anspruch 1, dadurch gekennzeichnet, daß die Anlageflächen (2a) durch ringförmige Ausnehmungen (2b) in den Stirnflächen der Bremsrolle (2) gebildet sind, in denen ein Dichtring (6) angeordnet ist.

3. Trommelbremse nach Anspruch 1 oder 2, dadurch gekennzeichnet, daß zwischen den zylindrischen Lagerflächen des Lagerbolzens (3) und der Bremsrolle (2) eine Lagerbuchse (7) angeordnet ist.

## Claims

1. Drum brake for vehicles, with two brake shoes (1) which can be actuated by a brake cam (4) and which each comprise a lining carrier (1a) with two webs (1b) which are arranged on the underside of the said lining carrier and at one end of which is arranged a bearing bolt (3) for a brake roller (2) cooperating with the brake cam (4), characterized in that the bearing bolt (3) is held in the axial direction on the brake shoe (1) by means of spring rings (5) engaging in two annular grooves (3a) of the bearing bolt (3) and bearing on the inner faces of the brake-shoe webs (1b), and the brake roller (2) is designed with bearing faces (2a) bearing on the spring rings (5).

2. Drum brake according to Claim 1, characterized in that the bearing faces (2a) are formed by annular recesses (2b) in the end faces of the brake roller (2), a sealing ring (6) being arranged in the said recesses.

3. Drum brake according to Claim 1 or 2, characterized in that a bearing bush (7) is arranged between the cylindrical bearing faces of the bearing bolt (3) and the brake roller (2).

## Revendications

1. Frein à tambour pour véhicules, comportant deux segments de frein (1) pouvant être commandés par une came de frein (4), dont chacun comprend un support de garniture (1a) avec deux traverses (1b) disposées sur sa face inférieure, à une extrémité desquelles est monté un boulon d'appui (3) pour un cylindre de frein (2) agissant conjointement avec la came de frein (4), caractérisé en ce que le boulon d'appui (3) est maintenu, dans la direction axiale au segment de frein (1), au moyen de joncs (5) qui s'emboîtent dans des rainures annulaires (3a) du boulon d'appui (3), disposés sur les faces intérieures des traverses des segments de frein (1b), et en ce que le cylindre de frein (2) est formé avec des surfaces de contact (2a) posées contre les joncs (5).

2. Frein à tambour selon la revendication 1, caractérisé en ce que les surfaces de contact (2a) sont formées par des évidements annulaires (2b) réalisés dans les surfaces avant du cylindre de frein (2), dans lesquels est placé un joint d'étanchéité (6).

3. Frein à tambour selon la revendication 1 ou 2, caractérisé en ce qu'un coussinet (7) est disposé entre les surfaces d'appui cylindriques du boulon d'appui (3) et le cylindre de frein (2).
